**Europäisches Patentamt**

**European Patent Office**

**Office européen des brevets**

(11) Veröffentlichungsnummer : **0 140 930**
**B1**

(12) **EUROPÄISCHE PATENTSCHRIFT**

(45) Veröffentlichungstag der Patentschrift :
**29.07.87**

(21) Anmeldenummer : **84901570.6**

(22) Anmeldetag : **24.04.84**

(86) Internationale Anmeldenummer :
**PCT/CH 84/00060**

(87) Internationale Veröffentlichungsnummer :
**WO/8404283 (08.11.84 Gazette 84/26)**

(51) Int. Cl.⁴ : **B 61 B 12/00**, B 60 J 5/06

(54) **KASTEN ZUM AUFNEHMEN VON FAHRGÄSTEN.**

(30) Priorität : **20.04.83 CH 2116/83**

(43) Veröffentlichungstag der Anmeldung :
**15.05.85 Patentblatt 85/20**

(45) Bekanntmachung des Hinweises auf die Patenterteilung : **29.07.87 Patentblatt 87/31**

(84) Benannte Vertragsstaaten :
**AT CH DE FR LI**

(56) Entgegenhaltungen :
**EP-A- 0 062 726**
**CH-A- 611 679**
**FR-A- 2 485 077**
**GB-A- 858 418**
**US-A- 4 327 648**

(73) Patentinhaber : **CWA CONSTRUCTIONS S.A.**
**Bornfeldstrasse 6**
**CH-4600 Olten (CH)**

(72) Erfinder : **FRECH, Anton**
**Haus Tannmatt**
**CH-6353 Weggis (CH)**
Erfinder : **RISER, Georg**
**Bündtenweg 59**
**CH-4461 Böckten (CH)**

(74) Vertreter : **Zbinden, Paul A. et al**
**Eder & Cie Münchensteinerstrasse 2**
**CH-4052 Basel (CH)**

Jouve, 18, rue St-Denis, 75001 Paris, France

**Beschreibung**

Die Erfindung betrifft einen Kasten gemäss dem Oberbegriff des Anspruchs 1.

Aus den schweizerischen Patentschriften 569 603, 603 398, 611 679 und 626 842 sind Kabinen für Kabinenbahnen, nämlich Drahtseilbahnen, bekannt, die einen Kasten mit einem Boden, zwei Seitenwänden, zwei Stirnwänden und einem Dach aufweisen. Die eine Seitenwand dieser Kabinen ist mit einer Türöffnung versehen, die mit einer ein- oder zweiflügeligen Türe verschliessbar ist. Die Türflügel sind dabei entweder um eine bezüglich des restlichen Kabinen-Kastens feste Schwenkachse schwenkbar oder aber entlang einer starr am restlichen Kabinen-Kasten angeordneten, horizontalen Führung verschiebbar. Im übrigen sind bei den Stationen dieser Kabinenbahnen Steuerorgane angeordnet. Die Kabinen weisen Abtastorgane auf, mit denen sie diese Steuerorgane abtasten können. Diese Abtastorgane stehen über eine Betätigungsvorrichtung in Wirkverbindung mit den Türflügeln, so dass diese bei der Einfahrt in eine Station automatisch geöffnet und bei der Ausfahrt wieder automatisch geschlossen werden.

Wenn die Türflügel gemäss den Schweizerpatentschriften 569 603 und 626 842, um eine bezüglich der restlichen Kabine feste Schwenkachse schwenkbar sind und in einer Station bei Öffnen nach aussen geöffnet werden, schwingen sie relativ weit in den Raum der Station hinaus. Dadurch wird der Platzbedarf erhöht und es sind auch Massnahmen zu treffen, dass die sich automatisch öffnenden Türflügel keine auf der Station wartenden Personen verletzen.

Bei den aus den Schweizerpatentschriften 603 398 und 611 679 bekannten Kabinen, bei denen die Türflügel bezüglich des restlichen Kabinen-Kastens verschiebbar sind, weist die die Türöffnung begrenzende Seitenwand Führungen für die Türflügel auf. Die Türflügel und ihre Führungen müssen praktisch zwangsläufig mindestens teilweise auf der Aussenseite der eigentlichen Seitenwand angeordnet werden. Es ist dann schwierig, die Führungen gegen Witterungseinflüsse und bei Bergbahnen für den Wintersportbetrieb insbesondere gegen Schnee und Vereisung zu schützen. Wenn sich die Türflügel aussen an den Seitenwänden befinden, bilden ihre Ränder teilweise zusammen mit den restlichen Wandteilen Schultern, die den Luftwiderstand erhöhen, was sich besonders bei starkem Wind nachteilig auswirkt. Ferner erhöhen die an der Aussenseite der Seitenwände befindlichen Schiebe-Türflügel die Breite der Kabinen. Eine grosse Breite der Kabine bedingt jedoch ihrerseits einen grossen Platzbedarf der Stationen und für die Garagierung, d. h. Aufbewahrung der Kabine bei Betriebspausen.

Die bei den bekannten Kabinen zur Hauptachse im Bodenteil des Kabinen-Kastens untergebrachten Vorrichtungen zum automatischen Öffnen und Schliessen der Türflügel benötigen im Grundriss verhältnismässig viel Platz. Beispielsweise erstreckt sich diese Vorrichtung bei der aus der schweizerischen Patentschrift 603 398 bekannten, verschiebbare Türflügel aufweisenden Kabine annähernd über die ganze Breite der Kabine. Dadurch wird es beispielsweise erschwert oder verunmöglicht, in der Mitte der Kabine einen im Boden verankerten und von diesem bis zum Dach reichenden, vertikalen Zentral-Träger vorzusehen, wie es von Fachleuten etwa als wünschenswert erachtet wird.

Bei den aus den vorgängig angegebenen Schweißerpatentschriften 569 603, 603 398 und 626 842 bekannten Kabinen weist der Kabinen-Kasten ein Gerippe und eine Verschalung auf, wobei die Seitenwände im wesentlichen durch vertikale Ebenen gebildet sind. Die Kabinen stellen daher einem Seitenwind einen starken Luftwiderstand entgegen und werden dementsprechend durch einen Seitenwind verhältnismässig stark ausgelenkt und zum Hin- und Herschwingen angeregt. Wenn eine Kabine mit vertikalen, ebenen Seitenwänden durch Windeinwirkung oder durch Bewegungen der Fahrgäste quer zur Fahrrichtung ausgelenkt wird, werden die untersten Teile der Seitenwände seitlich relativ weit über die normale Lage der Seitenwände hinausbewegt. Damit dies keine Schäden und Gefahren verursacht, müssen die Einfahrts-Begrenzungen der Stationen und auch andere Abmessungen verhältnismässig gross festgelegt werden.

Der Erfindung liegt nun die Aufgabe zugrunde, einen Kasten zum Aufnehmen für Fahrgäste zu schaffen, der insbesondere für die Bildung einer Kabine einer Kabinenbahn, wie einer Luftseilbahn, geeignet ist und es ermöglicht, die Nachteile der bekannten Kabinen-Kasten zu vermeiden. Die Erfindung soll dabei primär vorallem ermöglichen, diejenigen Nachteile zu vermeiden, die bei den vorbekannten Kabinen aus der Ausrüstung mit Türen resultiert, deren Türflügel entweder um eine bezüglich des restlichen Kabinen-Kastens feste Schwenkachse verschwenkbar oder entlang einer am restlichen Kabinen-Kasten befestigten Führung verschiebbar sind.

Diese Aufgabe wird ausgehend vom Stand der Technik gemäss der schweizerpatentschrift 611 679 durch einen Kasten gelöst, der nach der Erfindung gemäss dem Anspruch 1 ausgebildet ist. Zweckmässige Ausgestaltungen der Erfindung ergeben sich aus den vom Anspruch 1 abhängigen Ansprüchen.

Der Erfindungsgegenstand soll nun anhand eines in der Zeichnung dargestellten Ausführungsbeispiels erläutert werden. In der Zeichnung zeigt

die Figur 1 eine Kabinenbahn mit einer schematisch dargestellten Station und einer Kabine vor der Einfahrt in die Station, mit Blick auf die eine Türe aufweisende Seitenwand der Kabine,

die Figur 2 eine Ansicht des Kabinen-Kastens mit Blick auf die eine Stirnwand,

die Figur 3 eine Ansicht des Kabinen-Kastens mit Blick auf die türfreie Seitenwand,

die Figur 4 eine Draufsicht auf den Kabinen-Kasten von oben mit sich in der Schliess-Stellung befindenden Türflügeln,

die Figur 5 eine Draufsicht auf den Kabinen-Kasten von oben mit sich in der Öffnungs-Stellung befindenden Türflügeln,

die Figur 6 einen knapp über den Kabinenboden verlaufenden, schematisierten Horizontalschnitt durch die Kabine mit einer Draufsicht auf die Türbetätigungsvorrichtung bei sich in der Schliess-Stellung befindenden Türflügeln, in grösserem Massstab,

die Figur 7 eine der Figur 6 entsprechende Darstellung, aber bei sich in der Öffnungs-Stellung befindenden Türflügeln, wobei in den Figuren 6 und 7 zur Vereinfachung verschiedene Teile weggelassen und auch von verschiedenen von unten nach oben verlaufenden Bauteilen, wie Profilstäben und Dichtungskisten des Kabinenkastens und der Türflügel, die an sich geschnitten sind, nur die Umrisse angedeutet wurden,

die Figur 8 einen vereinfachten Schnitt durch die untere Gerad-Führung eines sich in der Schliess- Stellung befindenden Türflügels,

die Figur 9 eine schematisierte, schaubildliche Darstellung des Gerippes des Kabinen-Kastens,

die Figur 10 das Profil eines vom Boden zum Dach verlaufenden Profilstabes und

die Figur 11 eine schematische Explosionszeichnung einer Eckverbindung.

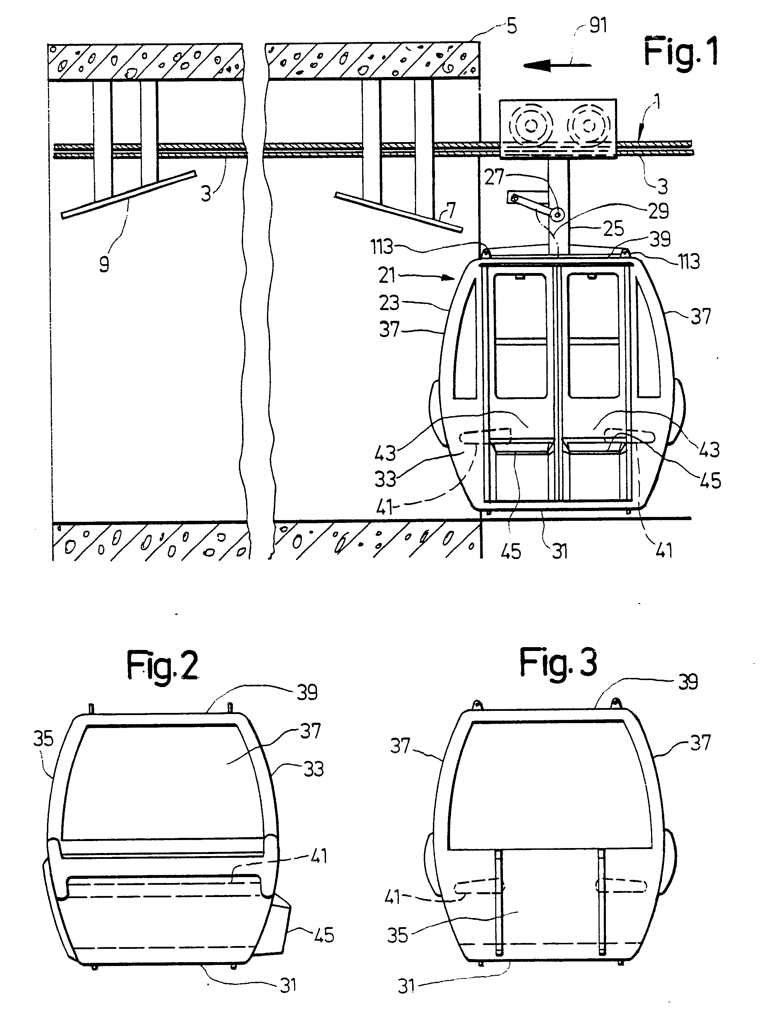

In der Figur 1 ist eine Kabinenbahn, nämlich eine Luftseilbahn dargestellt, die ein Tragseil 1, ein Zugseil 3 und Stationen aufweist, von denen eine mit 5 bezeichnet ist. Die Station 5 ist mit zwei Steuerorganen 7 und 9 versehen.

Die Kabinenbahn weist ferner Kabinen auf, von denen eine mit 21 bezeichnet ist. Diese besitzt einen zum Aufnehmen der Fahrgäste dienenden Kasten 23 und ein Gehänge 25, das auf dem Tragseil 1 laufende Laufrollen besitzt und am Zugseil 3 angreifen kann. Das Gehänge 25 ist ferner mit einem Tastorgan 27, nämlich einem Tasthebel zum Abtasten der Steuerorgane 7 versehen. Das Tastorgan ist über einen flexiblen, zum Übertragen von Zug- und Stossbewegungen dienenden Zug 29, beispielsweise einen Bowdenzug oder dergleichen, mit einer im Kabinenboden angeordneten Türbetätigungsvorrichtung verbunden.

Der noch separat in den Figuren 2 bis 5 dargestellte Kasten 23 der Kabine 21 besitzt einen Boden 31, zwei einander gegenüberstehende Seitenwände 33, 35, zwei Stirnwände 37 und ein Dach 39. Die beiden Seitenwände 33, 35 und die beiden Stirnwände 37 sind konvex gebogen, so dass der Kasten 23 in seiner halben Höhe die grösseren Umrissabmessungen hat und sich ausgehend von dieser Stelle als grössten Umriss nach unten und oben verjüngt. Im Innern des Kastens 23 ist bei jeder Stirnwand 37 ein Sitz 41 angeordnet, der beispielsweise als Bank für drei Personen ausgebildet sein kann, so dass also insgesamt sechs Personen in der Kabine sitzen können. Die Seitenwand 33 ist mit einer Türöffnung versehen, die mit einer zwei Türflügel 43 aufweisenden Türe verschliessbar ist. Jeder Türflügel 43 besitzt oben ein Fenster und ist unten auf seiner Aussenseite mit einem Skihalter 45 versehen, wobei jeder der letzteren Köcher zum Einstecken von drei Paar Skis aufweist.

Die beiden Türflügel 43 sind gleich gebogen wie die Seitenwand 33. Jeder der beiden Türflügel 43 ist mit noch näher beschriebenen Haltemitteln derart bewegbar an den festen Teilen des Kastens 23 gehalten, dass er sowohl um eine vertikale Schwenkachse verschwenkbar als auch horizontal verschiebbar ist. Die erwähnten Haltemittel sind derart beschaffen, dass die Türflügel 43, wenn sie sich in ihrer in den Figuren 1, 2 und 4 dargestellten Schliess-Stellung befinden, abgesehen von den Skihaltern 45, mit den an ihre von unten nach oben verlaufenden, einander abgewandten Ränder mit den sich seitlich von ihnen befindenden Abschnitten der Seitenwand 33 bündig sind, d. h. es sind die Aussenflächen der beiden sich in der Schliess-Stellung befindenden Türflügel miteinander und mit den Aussenflächen der anstossenden Abschnitte der Seitenwand 33 fluchtend.

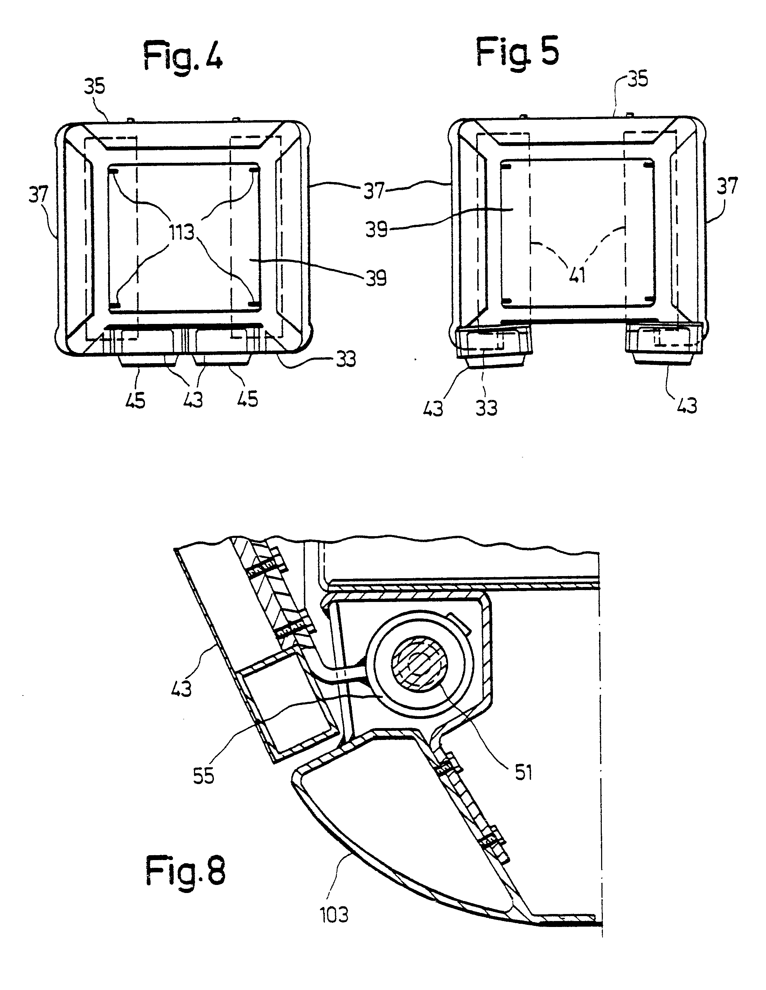

Beim Öffnen der Türflügel 43 werden diese nach aussen geschwenkt und gleichzeitig in horizontaler Richtung voneinander wegverschoben, so dass sie in die der Figur 5 dargestellte Öffnungs-Stellung gelangen. In dieser geben Sie eine Türöffnung frei, deren Breite ungefähr oder mindestens gleich der in der gleichen Richtung gemessenen Abmessung des Zwischenraumes zwischen den beiden Sitzen 41 ist.

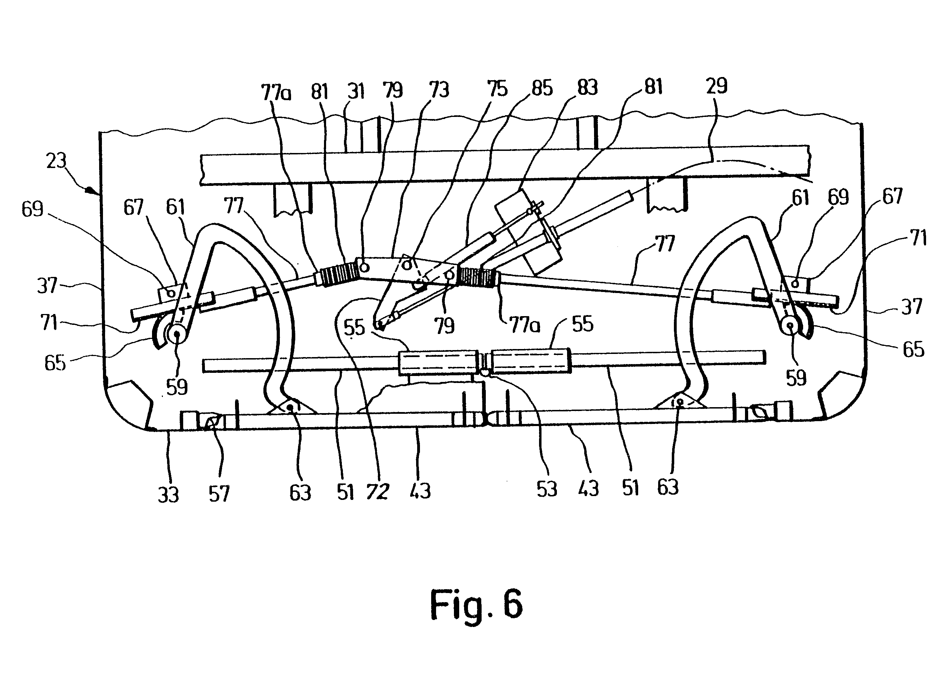

Nachfolgend werden anhand der Figuren 6 bis 8 die Haltemittel zum bewegbaren Halten der Türflügel 43 und die Türbetätigungsvorrichtung zum automatischen Öffnen und Schliessen der Tür erläutert.

Der Boden 31 weist eine schematisch angedeutete, durch Profilstäbe und weitere Teile gebildete, gerippeartige Struktur und einen Innen- oder Fussboden sowie einen Aussenboden auf. Die Türbetätigungsvorrichtung ist zur Hauptsache in dem zwischen den Innen- und Aussenboden vorhandenen Hohlraum angeordnet und die zum bewegbaren Halten der Türflügel dienenden Haltemittel sind teilweise ebenfalls dort untergebracht.

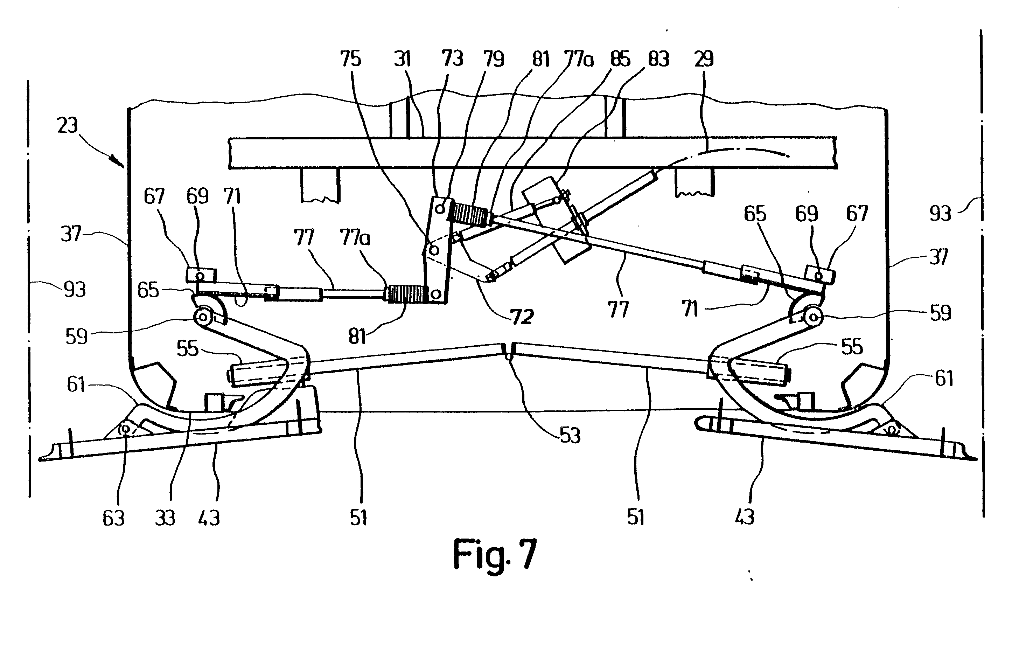

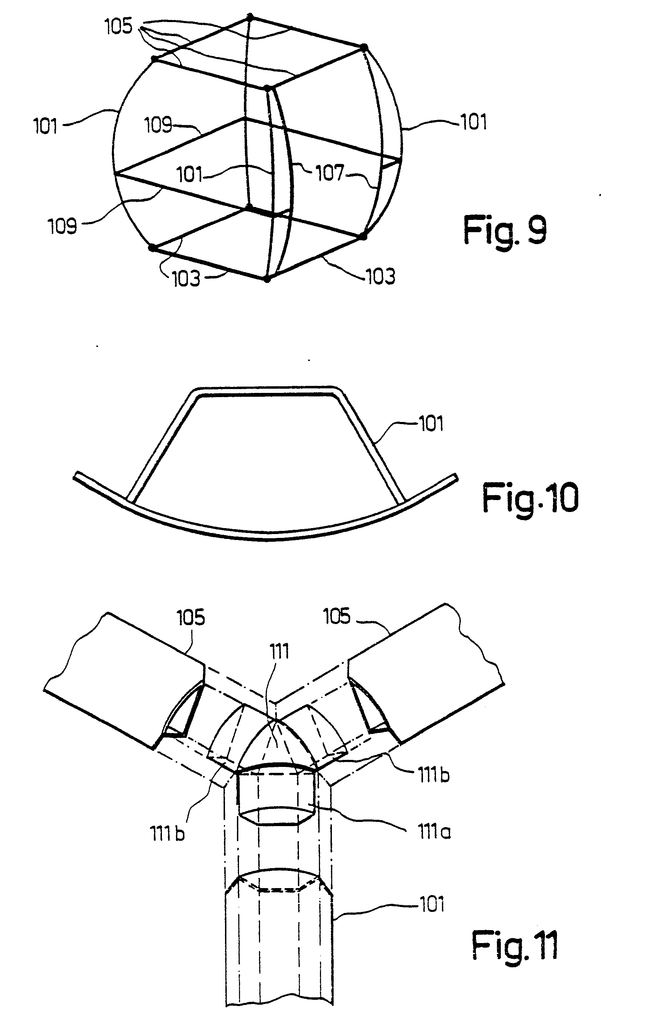

In der Nähe der unteren und oberen Ränder der beiden Türflügel 43 ist auf deren Innenseiten für jeden Türflügel je eine Gerad-Führung 51 vorhanden. Jede dieser vier Gerad-Führungen 51 ist im wesentlichen durch einen horizontalen Stab gebildet und mit einem scharnierartigen Schwenklager um eine vertikale Schwenkachse 53 schwenkbar gelagert, die in der vertikalen Mittelebene zwischen den beiden Stirnwänden 37 liegt. Jede Gerad-Führung 51 führt einen Schieber oder Schuh 55, der eine Hülse und in dieser angeordnete Lauf-Kugeln oder -Rollen aufweist. Die unteren Türflügelränder, von denen in den Figuren 6 und 7 nur ein Stück angedeutet ist, erstrecken sich, wie dies aus der Figur 8 ersichtlich ist, bis in die Nähe der unteren Schieber bzw. Schuhe 55 und sind starr an diesen befestigt, und zwar in der Nähe der einander zugewandten und in der Schliess-Stellung aneinander anstossenden Ränder der beiden Türflügel. Die oberen Türflügelränder sind analog ausgebildet und geführt.

An den zum Boden 31 gehörenden, starren Teilen der Kastenstruktur sind im Innenraum der Kabine in der Nähe der beiden seitlichen Begrenzungen 57 der Türöffnung Lagermittel angeordnet, die je eine vertikale Schwenkachse 59 definieren, um die ein ungefähr sichelartiger Schwenkarm 61 schwenkbar ist. Die anderen Enden dieser Schwenkarme 61 sind auf den Innenseiten der Türflügel 43 mit diesen durch Gelenke mit vertikalen Bolzen 63 verbunden. Diese Bolzen 63 befinden sich an den einander abgewandten Hälften der beiden Türflügel 43.

Jeder Schwenkarm 61 ist drehfest mit einem Körper verbunden, der durch ein Zahnsegment oder eventuell Zahnrad gebildet ist und eine Verzahnung 65 besitzt, die sich mindestens über einen Sektor eines zur Schwenkachse 59 koaxialen Kreises erstreckt. In der Nähe von jeder der beiden Verzahnungen 65 ist je eine Halterung 67 um eine vertikale Schwenkachse 69 schwenkbar mit dem Boden 31 verbunden. Jede Halterung 67 weist auf ihrer der Verzahnung 65 zugewandten Seite eine gegen oben offene Kehle auf. Eine in dieser Kehle aufliegende Zahnstange 71 wird von der Halterung 67 unten und seitlich geführt, so dass sie in ihrer Längsrichtung entlang der Kehle verschiebbar und innerhalb gewisser Grenzen um die Schwenkachse 59 der Verzahnung 65 herumbewegbar ist und dabei immer in Eingriff mit der Verzahnung 65 bleibt.

Im Boden 31 sitzt eine Kurbel 72, die mit einem vertikal angeordneten Kurbelzapfen 75 in einem bezüglich des Kabinenkastens festen Lager drehbar gelagert ist. Am Kurbelzapfen ist ein Schwenkarmpaar 73 befestigt. Am Ende jedes vorzugsweise gegabelten Schwenkarmes ist mittels eines Bolzens 79 eine Schub- oder Verbindungsstange 77 angelenkt, wobei die Konstruktion vorzugsweise so ausgestaltet ist, dass die Stange 77 durch eine Querbohrung des Bolzens 79 hindurchgeführt ist und an ihrem äusseren Ende mit einer Mutter oder einem Splinten versehen ist, während auf der anderen Seite des Bolzens ein Anschlag 77a vorhanden ist, der ein beispielsweise aus Tellerfedern gebildetes Feder-Mittel 81 festhält, wodurch ein entgegen der Kraft des Feder-Mittels 81 begrenzt längenveränderliches Zwischenglied gebildet wird. Das der Kurbel 72 abgewandte Ende jeder Schub- oder Verbindungsstange 77 ist starr mit einer der Zahnstangen 71 verbunden.

An einem starr mit dem Boden 31 verbundenen, beispielsweise durch ein Winkelstück gebildeten Support 83 ist das eine Ende eines weiteren Feder-Mittels 85, nämlich einer Gasdruckfeder gelenkig befestigt. Das andere Ende dieser Gasdruckfeder greift an der Kurbel 72 an. Das untere Ende des Mantels des flexiben Zuges 29 ist ebenfalls am Support 83 befestigt. Der eigentliche Zug 29, d. h. dessen längsverschiebbare, am Ende zweckmässigerweise starr ausgebildete Seele, ist ebenfalls mit der Kurbel 72 verbunden, beispielsweise am Kurbelarm angelenkt.

Während der Fahrt der Kabine 21 nimmt das Tastorgan 27 die in der Figur 1 dargestellte Lage ein und die Türflügel 43 befinden sich in ihrer Schliess-Stellung. Die im Boden 31 der Kabine 21 angeordneten Elemente der Türbetätigungsvorrichtung haben dann die in der Figur 6 dargestellten Stellungen. Die Gerad-Führungen 51 verlaufen dann insbesondere parallel zur Seitenwand 33 und fluchten paarweise miteinander. Die Schwenkorgane 61 befinden sich in diesem Zustand im Grundriss vollständig im Inneren der Kabine.

Wenn nun die Kabine in der Richtung der Pfeils 91 in die Station 5 einfährt, wird das Tastorgan 27 durch das Steuerorgan 3 nach oben verschoben. Diese Bewegung wird durch den Zug 29 auf die Kurbel 72 übertragen, die dadurch im Gegen-Uhrzeigersinn um beispielsweise ungefähr 90° in die in der Figur 7 dargestelle Stellung verschwenkt wird. Die Kurbel 72 zieht dabei die Zahnstangen 71 über die Verbindungsstangen 77 von den Stirnwänden 37 weg. Dabei verschwenken die mit den Verzahnungen 65 kämmenden Zahnstangen 71 die beiden Schwenkarme 61 und zwar in entgegengesetzten Drehrichtungen, so dass der sich in den Figuren 6 und 7 links befindende Schwenkarm 61 im Uhrzeigersinn und der andere Schwenkarm 61 im Gegenuhrzeigersinn verschwenkt wird. Dabei werden die Bolzen 63, durch die die Schwenkarme 61 mit den Türflügeln 43 verbunden sind, auf die Aussenseite der Seitenwand 33 in die in der Figur 7 dargestellte Lage bewegt. Die beiden Türflügel 43 werden dementsprechend voneinander weg und nach aussen in ihre Öffnungs-Stellung gezogen. Dies hat zur Folge dass die Türflügel im Grundriss nun nicht mehr wie in der Schliess-Stellung parallel zur Seitenwand 33 verlaufen, sondern von der Türöffnung weg leicht schräg nach aussen gerichtet sind. Dementsprechend werden auch die Gerad-Führungen 51 etwas zum Aussenraum hin geschwenkt, bleiben jedoch noch im Innenraum der Kabine. In der Figur 7 sind noch die beiden vertikalen Schmiegeebenen 93 angedeutet, die sich an die am weitesten voneinander entfernten Stellen der horizontal entlang den Stirnwänden 37 verlaufenden Stossdämpfer anschmiegen. Wie aus der Figur 7 und im übrigen auch aus der Figur 5 ersehen werden kann, befinden sich die Türflügel auch in der Öffnungs-Stellung vollständig zwischen diesen vertikalen Schmiegeebenen. Im übrigen werden die Türflügel auch nur wenig von der Seitenwand 33 weg bewegt, so dass sie also beim Öffnen nur wenig Umgebungsraum beanspruchen.

Wenn die Kabine 21 wieder in der Richtung des Pfeils 91 aus der Station 5 ausfährt, bewirkt das Steuerorgan 9 ein Abwärtsverschieben des Tastorgans 27. Dies hat dann zur Folge, dass die Türflügel wieder in ihre Schliess-Stellung bewegt werden.

Das Schwenkarmpaar 73 ist derart auf dem Kurbelzapfen 75 angeordnet, dass die beiden Bolzen 79 beim Schliessen der Türflügel knapp vor dem Erreichen der Endstellung die Totpunktlage durchlaufen. Die Feder-Mittel 81 sind nun derart beschaffen, dass sie mindestens dann eine die Zahnstangen 71 von der Kurbel 73 wegdrückende Kraft erzeugen, wenn die Kurbel eine sich im Umgebungsbereich der genannten Totpunktlage befindende Stellung einnimmt. Zweckmässigerweise drücken die Feder-Mittel 81 die Zahnstangen mindestens in demjenigen Drehstellungsbereich der Kurbel von dieser weg, der sich von der genannten Totpunktlage bis zu jener Kurbel-Endstellung erstreckt, bei der die Türflügel geschlossen sind : Mit anderen Worten : die Feder-Mittel 81 sind bestrebt, die Türflügel zu schliessen, wenn sich die Kurbel im genannten Drehstellungsbereich befindet.

Im Unterschied dazu ist das durch die Gasdruckfeder gebildete Feder-Mittel 85 derart angeordnet, dass ihr Anlenkbolzen, wie das aus der Fig. 7 ersichtlich ist, knapp vor dem vollständigen Öffnen der Türflügel die Totpunktstellung erreicht und überschreitet.

Dies hat zur Folge, dass die Gasdruckfeder 85 zwar die vollständig geöffneten Türflügel offen hält, jedoch den einmal eingeleiteten Schliessvorgang der Türen fortsetzt und sicher zu Ende führt, da zwar die Kraft der Gasdruckfeder konstant ist, das von ihr ausgeübte Druckmoment auf die Kurbel jedoch, wie man aus der Fig. 6 ersehen kann, in der Stellung der Kurbel am grössten ist, in der die Türflügel geschlossen sind. Die Feder-Mittel 81, 85 wirken also derart, dass sie bestrebt sind, die Turflügel entweder ganz geschlossen oder ganz offen zu halten. Wenn also beispielsweise eine Person beim automatischen Schliessen der Türflügel einen Körperteil, etwa einen Arm oder den Kopf, in der Türöffnung einklemmt, kann der Türflügel einen ausreichend grossen Spalt frei lassen, wobei er aber ständig mit einer Kraft beaufschlagt wird, die bestrebt ist, ihn zu schliessen.

In der Figur 9 sind schematisch die Hauptteile des Gerippes des Kabinen-Kastens 23 dargestellt. Dieses Gerippe weist vier Profilstäbe 101 auf, die entlang den Rändern zweier aneinander anstossender Wände vom Boden zum Dach verlaufen. Ferner sind vier einen geschlossenen Rahmen des Bodens 31 bildende Profilstäbe 103 und vier einen geschlossenen Rahmen des Daches 39 bildende Profilstäbe 105 vorhanden. Im Bereich der Seitenwand 33 sind noch zwei von unten nach oben verlaufende, die seitlichen Begrenzungen der Türöffnung bildende Profilstäbe 107 angeordnet. Schliesslich sind noch Profilstäbe 109 vorhanden, die etwas unterhalb der halben Höhe des Kastens 23 horizontal entlang den Wänden verlaufen, wobei der an der Seitenwand 33 angeordnete Profilstab bei der Türöffnung natürlich unterbrochen ist. Die vier Profilstäbe 101 haben alle das gleiche, in der Figur 10 dargestellte Profil und sind im übrigen alle gleich lang. Der Profilstab 101 hat einen rohrförmigen, d. h. einen Hohlraum begrenzenden Profilabschnitt, dessen sich auf der Aussenseite des Kastens 23 befindendliche Wand konvex, kreisbogenförmig ist und beiseitig über den rohrförmigen Profilstabteil herausragende Flanschen bildet. Die den Bodenrahmen bildenden Profilstäbe 103 und die den Dachrahmen bildenden Profilstäbe 105 sind alle gleich lang und haben, abgesehen von einer Besonderheit der beiden zur Seitenwand 33 gehörenden Profilstäbe, alle das gleiche Profil, das aus der Figur 11 ersichtlich ist. Die Profilstäbe 103 und 105 weisen ebenfalls einen rohrförmigen, einen Hohlraum begrenzenden Profilabschnitt auf, der auf der Aussenseite durch eine konvex, kreisbogenförmige Wand begrenzt ist, die beiseitig über den rohrförmigen Profilabschnitt herausragende Flanschen bildet. Der den unteren Rand der Seitenwand 33 bildendet Profilstab 103 und der den oberen Rand dieser Seitenwand bildende Profilstab 105 unterscheiden sich von den übrigen Profilstäben 103 und 105 nur dadurch, dass der eine Flansch, nämlich derjenige, der der Türöffnung zugewandt wäre, mindestens im Bereich der letzteren abgetrennt worden ist, wie es aus der Figur für den Profilstab 103 dargestellt ist.

Die vier Profilstäbe 101 sind in ihrer Längsrichtung konvex kreisbogenförmig gebogen, wobei die durch sie aufgespannten Kreisbogen je entlang einer Vertikalebene verlaufen, die in einen horizontalen Schnitt mit den beim betreffenden Profilstab aneinander anstossenden Wänden einen Winkel von 45° bildet.

Ferner sind acht Eck-Verbindungskörper 111 vorhanden, von denen einer in der Figur 11 ersichtlich ist. Der Eck-Verbindungskörper 111 weist einen Mittelteil auf, der auf seiner dem Kabinen-Innenraum abgewandten Seite durch eine räumlich konvex gebogene, d. h. gewölbte Fläche begrenzt ist. Vom Mittelteil des Verbindungskörpers 111 gehen drei Zapfen, nämlich ein Zapfen 111a und zwei Zapfen 111b aus. Der Zapfen 111a ist satt in den Hohlraum eines Profilstabes 101 steckbar. Die Zapfen 111b können satt in den Hohlraum von je einem Profilstab 105 oder natürlich auch von einem Profilstab 103 gesteckt werden.

Die Eck-Verbindungsstücke 111 ermöglichen es, die Profilstäbe 101, 103 und 105 rasch und einfach durch Steckverbindungen miteinander zu verbinden. Nach dem Zusammenstecken können die Profilstäbe durch zusätzliche Befestigungsmittel, beispielsweise Schrauben oder Nieten oder durch Verschweissen oder Verkleben mit dem Verbindungskörper 111 fest verbunden werden.

Die Profilstäbe 107 und 109 und die noch im Bereich des Bodens vorhandenen Gerippeteile können in irgend einer Weise problemlos an den Profilstäben 101, 103 und 105 befestigt werden. Die die Verschalung des Kabinen-Kastens 23 bildenden Blechplatten und Fensterscheiben können ebenfalls rasch und einfach an den Flan-

schen der Profilstäbe 101, 103 und 105 befestigt werden. Die Halterungen für die Verbindung des Gehäuses 25 mit dem Kabinen-Kasten 23 können je an einem der vier oberen Eck-Verbindungskörper 111 und zusätzlich an den durch diese verbundenen Profilstabenden befestigt werden.

Der Kabinen-Kasten 23 lässt sich daher schnell und ohne oder mit nur sehr wenig Schweissarbeiten zusammensetzen und ist nachher sehr stabil. Im übrigen sind alle Stossstellen der Wände miteinander und mit dem Boden oder Dach verbunden und alle Wände 33, 35 und 37 des Kabinen-Kastens sind im Vertikal-Schnitt gesehen konvex gebogen, so dass sie sich insbesondere zum Boden hin einander annähern. Die Kabine hat daher nur einen geringen Luftwiderstand. Wenn etwa die Kabine trotz des geringen Luftwiderstandes durch einen quer zur Fahrrichtung wehenden Seitenwind oder durch Bewegungen der Fahrgäste ausgelenkt wird, bleibt die maximale Entfernung eines Seitenrandes des Bodens von der durch das Tragseil 1 verlaufenden Vertikalebene immer noch verhältnismässig klein.

Die Kabine kann natürlich nicht nur für sechs Fahrgäste, sondern auch für eine kleinere oder grössere Anzahl Fahrgäste, beispielsweise für vier oder acht Fahrgäste konzipiert werden, wobei die quer zur Fahrrichtung gemessene horizontale Ausdehnung der Stirnwände entsprechend geändert werden kann, während die übrigen Abmessungen gleich bleiben können.

Ferner kann der Kubelarm der Kurbel 72 als Zahnsegment oder Zahrad ausgebildet werden. Das dem Tastorgan 27 abgewandte Ende des Zuges 29 würde dann mit einer verschiebbar geführten Zahnstange verbunden, die mit der Verzahnung des zur Kurbel gehörenden Zahnsegmentes bzw. Zahnrades kämmt.

Das als Gasdruckfeder ausgebildete Feder-Mittel 85 kann eventuell wegfallen.

Des weitern kann noch eine Notöffnungsvorrichtung vorgesehen werden, um die Türflügel bei Betriebspannen öffnen zu können. Die Notöffnungsvorrichtung kann beispielsweise eine horizontal verschiebbare Stange aufweisen, die beispielsweise unter den Türflügeln aus der Kabine herausragt und von aussen her verschoben werden kann. Die Kurbel 72 kann dann mit einem Arm oder dergleichen versehen sein, an dem die Stange angreifen kann, um die Kurbel zu verschwenken. Ferner kann vorgesehen werden, dass die Kurbel 72 auch mit einem vom Aussenraum der Kabine her einführbaren Schlüssel verschwenkbar ist. Bei sich in Schliess-Stellung befindenden Türflügeln kann die Kurbel dann mit der erwähnten Stange oder dem erwähnten Schlüssel so weit verschwenkt werden, dass die Türflügel geöffnet werden.

Ferner können die Verbindungskörper 111 durch Verbindungskörper ersetzt werden, die anstelle der Zapfen 111a, 111b, 111c Fortsätze besitzen, die an die dem Innern der Kabine zugewandten Flächen der zu verbindenden Profilstäbe angenietet werden.

Zudem kann eventuell nur ein einziger Türflügel zum Verschliessen der Türöffnung vorgesehen werden.

**Patentansprüche**

1. Kasten zum Aufnehmen von Fahrgästen, insbesondere für die Bildung einer Kabine für eine Kabinenbahn, beispielsweise eine Luftseilbahn, mit mindestens einer durch mindestens einen verschiebbar geführten Türflügel (43) verschliessbaren Türöffnung, mindestens einem um eine vertikale Schwenkachse (59) schwenkbaren Schwenkarm (61) und Mitteln, um diesen zu verschwenken, wobei der Schwenkarm (61) durch eine Gelenkverbindung mit dem Türflügel (43) verbunden ist, dadurch gekennzeichnet, dass dem bzw. jedem Türflügel (43) eine obere und eine untere, ihn verschiebbar führende Führung (51) zugeordnet sind, die beide um eine vertikale Schwenkachse (53) schwenkbar am Kasten gehalten sind, wobei die Schwenkachsen (53) der obern und untern Führung (51) koaxial zueinander angeordnet sind.

2. Kasten nach Anspruch 1, dadurch gekennzeichnet, dass die Schwenkachsen (53) der Führungen (51) und die Schwenkachse (59), um welche der bzw. jeder Schwenkarm (61) schwenkbar ist, derart angeordnet sind dass der bzw. jeder Schwenkarm (61) den mit ihm verbundenen Türflügel (43) ausgehend von dessen Schliess-Stellung beim Öffnen entlang der Führungen (51) und gleichzeitig zum Aussenraum des Kastens hin bewegt.

3. Kasten nach einem der Ansprüche 1 oder 2, dadurch gekennzeichnet, dass sich die Schwenkachse (59) für den bzw. jeden Schwenkarm (61) im Grundriss gesehen im Bereich des Innenraums des Kastens befindet und dass die Führungen (51) als Gerad-Führungen ausgebildet und vorzugsweise auf der Innenseite des bzw. jedes Türflügels (43) angeordnet sind.

4. Kasten nach einem der Ansprüche 1 bis 3, wobei zum Verschliessen der bzw. jeder Türöffnung mindestens zwei Türflügel (43) und für jeden von diesen ein Schwenkarm (61) der genannten Art vorhanden sind, dadurch gekennzeichnet, dass die Schwenkachsen (53) der Führungen (51) in der Nähe der aneinander angrenzenden Kanten der beiden sich in der Schliess-Stellung befindenden Türflügel (43) angeordnet sind.

5. Kasten nach einem der Ansprüche 1 bis 4, wobei zwei Türflügel (43) vorhanden sind, deren Aussenflächen in der Schliess-Stellung der Türflügel (43) miteinander fluchten, dadurch gekennzeichnet, dass die Aussenflächen der sich in ihren Schliess-Stellungen befindenden Türflügel (43) mit den Aussenflächen der an ihre beiden einander abgewandten Ränder anstossenden Abschnitte der die Türöffnung enthaltenden Seitenwand (33) fluchten.

6. Kasten nach einem der Ansprüche 1 bis 5, für eine Kabinenbahn, bei deren Stationen Steuerorgane (7, 9) angeordnet sind, mit einem zum Abtasten der Steuerorgane (7, 9) bestimmten Abtastorgan (27), das in Wirkverbindung mit dem bzw. jedem Schwenkarm (61) steht, um den Türflügel (43) bei der Einfahrt in eine Station (5) zu öffnen und bei der Ausfahrt aus der Station zu schliessen, dadurch gekennzeichnet, dass der Türflügel (43) mittels eines vertikalen Bolzens (63) am Schwenkarm (61) angelenkt ist, dass das Abtastorgan (27) in Wirkverbindung mit einer Kurbel (72) steht, dass der Schwenkarm (61) drehfest mit einer sich mindestens über einen Sektor eines Kreises erstreckenden Verzahnung verbunden ist, dass eine Zahnstange (71) und ein Haltemittel (67) vorhanden sind, um die Zahnstange (71) bezüglich des Kastens verschiebbar und verschwenkbar in Eingriff mit der mindestens einen Sektor bildenden Verzahnung (65) zu halten, und dass die Zahnstange (71) über ein begrenzt längenveränderliches Zwischenglied (77, 81) mit einem an der Kurbel (72) angebrachten Schwenkarm (73) verbunden ist.

7. Kasten nach Anspruch 6, dadurch gekennzeichnet, dass die an der Kurbel (72) angebrachten Schwenkarme (73) derart angeordnet sind, dass beim Verschwenken der Kurbel zum Öffnen des Türflügels (43) die Verbindungsstelle Schwenkarm (73) — Zahnstange (71) zuerst den Totpunkt überschreiten muss und dass mindestens ein Feder-Mittel (81, 85) vorhanden und derart angeordnet ist, dass zum Schliessen des geöffneten Türflügels (43) die Kurbel (72) zuerst entgegen der Kraft dieses Feder-Mittels (81, 85) verschwenkt werden muss, worauf das Feder-Mittel (81, 85) den Schliessvorgang unterstützt.

8. Kasten nach Anspruch 7, dadurch gekennzeichnet, dass das längenveränderliche Zwischenglied (77, 81) das bzw. ein zum Erzeugen einer Druckkraft ausgebildetes Feder-Mittel (81) aufweist, wobei das längenveränderliche Zwischenglied (77, 81) vorzugsweise eine Stange (77) aufweist, deren eines Ende starr mit der genannten Zahnstange (71) verbunden ist und deren anderes Ende schwenkbar und längsverschiebbar mit der Kurbel (72) verbunden ist, wobei das zum längenveränderlichen Zwischenglied (77) gehörende Feder-Mittel (81) vorzugsweise zwischen einem Anschlag (77a) der Stange (77) und der Verbindungsstelle, bei der die Stange (77) mit der Kurbel (72) verbunden ist, angeordnet ist.

9. Kasten nach einem der Ansprüche 6 bis 8, dadurch gekennzeichnet, dass die Kurbel einen Teil mit einer Verzahnung aufweist, die in Eingriff mit einer Zahnstange steht, die mit dem Abtastorgan (27) verbunden ist.

10. Kasten nach einem der Ansprüche 1 bis 9, mit einem Boden (31) zwei sich gegenüberstehenden Seitenwänden (33, 35), von denen mindestens eine eine Türöffnung der genannten Art aufweist, zwei sich gegeüberstehenden Stirnwänden (37) und einem Dach (39), dadurch gekennzeichnet, dass ein Gerippe, das den Boden (31) mit dem Dach (39) verbindet, sowie entlang den Kanten benachbarter Wände verlaufende und diese ebenfalls miteinander verbindende Profilstäbe vorhanden sind, dass die Stirnwände (37) konvex gebogen sind und dass auch die Seitenwände (33, 35) konvex gebogen sind, wobei vorzugsweise jeder Profilstab in einer Ebene gebogen ist, die im Grundriss mit den beim betreffenden Profilstab aneinander anstossenden Wänden einen Winkel von 45° bildet.

**Claims**

1. Compartment for accommodating passengers, in particular to serve as a cabin for a cabin train, such as a cable car, the compartment comprising at least one door opening adapted to be closed by means of at least one displaceably guided door wing (43), furthermore at least one pivot arm (61) pivotable around a vertical pivot axis (59) and means adapted for pivoting said pivot arm (61), said pivot arm (61) being connected with the door wing (43) by way of a hinge connection, characterized in that an upper and a lower guide (51) is associated with the, or with each, door wing (43) and adapted to displaceably guide the same, both the upper and the lower guide (51) being held on the compartment pivotably around a pivot axis (53), the pivot axes (53) of the upper and lwoer guide (51) being disposed coaxial in relation to each other.

2. Compartment as claimed in claim 1, characterized in that the pivot axes (53) of the guides (51) and the pivot axis (59) around which the, or each, pivot arm (61) is pivotably mounted are so arranged, that the, or each, pivot arm (61) will displace the door wing (43) it is connected with — starting out from the closed position thereof — along the guide (51), and at the same time toward the outside of the compartment.

3. Compartment as claimed in one of the claims 1 or 2, characterized in that the pivot axis (59) of the, or of each, pivot arm (61) is disposed in top view within the inside space of the compartment, and that the guides (51) are built as straight guides and ar preferably disposed on the inner side of the, or of each, door wing (43).

4. Compartment as claimed in one of the claims 1 to 3, wherein at least two door wings (43) are provided for closing the, or each, door opening, a pivot arm (61) of the previously mentioned kind being provided for each door wing (43), characterized in that the pivot axes (53) of the guides (51) are disposed in the vicinity of the adjoining edges of the door wings (43) in their closed position.

5. Compartment as claimed in one of the claims 1 to 4, the compartment comprising two door wings (43) having their outer surfaces aligned with each other in the closed position of the door wings (43), characterized in that the outer surfaces of the door wings (43) in their closed positions are arranged to be aligned with the outer surfaces of those sections of the lateral wall (33) containing the door opening that abut against the two edges of the door wings (43) that face away from each other.

6. Compartment as claimed in one of the claims 1 to 5, for a cabin train provided at its stations with control members (7, 9) comprising each a sensing member (27) destined to sense the control members (7, 9) and being operatively connected with the, or with each, pivot arm (61) to open the door wing (43) when entering a station (5) and to close the same when leaving the station, characterized in that the door wing (43) is hinged on the pivot arm (61) by means of a vertical bolt (63), that the sensing member (27) is operatively connected with a crank (72), that the pivot arm (61) is fixedly connected against rotation in relation to toothing extending at least over a sector of a circle, that a toothed rack (71) and holding means (67) are provided, to hold the toothed rack (71) — displaceably and pivotably in relation to the compartment — in engagment with the toothing (65) which extends at least over a sector, and that the toothed rack (71) is connected with a pivot arm (73) mounted on the crank (72), by way of an intermediate member (77, 81) of limitedly variable length.

7. Compartment as claimed in claim 6, characterized in that the pivot arms (73) mounted on the crank (72) are so disposed, that when pivoting the crank for opening the door wing (43) the junction between the pivot arm (73) and the toothed rack (71) must first pass through the dead center, and that at least one spring means (81, 85) is provided and so disposed, that when closing the open door wing (43) the crank (72) must first be pivoted against the force of this spring means (81, 85), after which the spring means (81, 85) will support the closing operation.

8. Compartment as claimed in claim 7, characterized in that the intermediate member (77, 81) adjustable in length comprises the, or a, spring means (81) adapted for generating a compression force, said intermediate member (77, 81) being preferably arranged to comprise a bar (77) having its one end rigidly connected with said toothed rack (71) and its other end with the crank (72) pivotably and adjustably in longitudinal direction, the spring means (81) associated with the intermediate member (77) variable in length being preferably disposed between a stop (77a) of the bar (77) and the junction between the bar (77) and the crank (72).

9. Compartment as claimed in one of the claims 6 to 8, characterized in that the crank comprises a section provided with toothing arranged to be in engagement with a toothed rack connected with the sensing member (27).

10. Compartment as claimed in one of the claims 1 to 9, the compartment comprising a floor (31), two mutually opposite lateral walls (33, 35) at least one of which being arranged to comprise one door opening of the previously mentioned kind, two mutually opposite front walls (37), and a roof (39), characterized in that a framework connecting the floor (31) with the roof (39), and structured bars running along the edges of adjacent walls and connecting the same with each other are provided, that the front walls (37) are convexly curved and that the lateral walls too are convexly curved, each structural bar being preferably curved in a plane which — in top view — forms an angle of 45° with the walls abutting against each other at the respective structural bar.

**Revendications**

1. Caisse destinée à recevoir des passagers, notamment pour constituer la cabine d'un moyen de transport à cabine tel que par exemple un téléphérique, comprenant au moins une baie obturable par au moins un vantail (43) guidé en translation, au moins un bras orientable (61) pouvant basculer autour d'un axe vertical (59), et des moyens destinés à faire basculer ce bras (61), celui-ci étant relié au vantail (43) par une articulation, caractérisée en ce qu'il est associé au ou à chaque vantail (43) une glissière supérieure et une glissière inférieure (51) qui le guident en translation et qui sont toutes deux montées orientables sur la caisse autour d'un axe vertical de pivotement (53), les axes de pivotement (53) des glissières supérieure et inférieure (51) étant disposés de manière coaxiale l'un à l'autre.

2. Caisse selon la revendication 1, caractérisée en ce que les axes de pivotement (53) des glissières (51) et l'axe de basculement (59) autour duquel peut basculer le ou chaque bras orientable (61) sont disposés de façon telle que le ou chaque bras orientable (61) sont disposés de façon telle que le ou chaque bras orientable (61) déplace le vantail (43) auquel il est relié, lors du mouvement d'ouverture de ce vantail commencé à sa position de fermeture, le long des glissières (51) et en même temps vers l'extérieur de la caisse.

3. Caisse selon l'une des revendications 1 et 2, caractérisée en ce que, vu en projection horizontale, l'axe de basculement (59) du ou de chaque bras orientable (61) se trouve dans la zone de l'intérieur de la caisse et en ce que les glissières (51) sont agencées sous forme de glissières rectilignes et sont disposées de préférence sur le côté intérieur du ou de chaque vantail (43).

4. Caisse selon l'une des revendications 1 à 3, dans laquelle il est prévu, pour obturer la ou chaque baie, au moins deux vantaux (43) et, pour chacun de ceux-ci, un bras orientable (61) du type indiqué, caractérisée en ce que les axes de pivotement (53) des glissières (51) sont disposés au voisinage des bords voisins entre eux des deux vantaux (43) se trouvant dans la position de fermeture.

5. Caisse selon l'une des revendications 1 à 4, dans laquelle il est prévu deux vantaux (43) dont les surfaces extérieures sont dans le prolongement l'une de l'autre dans la position de fermeture des vantaux (43), caractérisée en ce que les surfaces extérieures des vantaux (43) se trouvant dans leur position de fermeture sont dans le prolongement des surfaces extérieures des parties de la paroi latérale (33) contenant la baie qui sont contiguës à leurs deux bords opposés.

6. Caisse selon l'une des revendications 1 à 5, pour moyen de transport à cabine aux stations duquel sont disposés des organes de commande (7, 9), cette caisse comprenant un organe palpeur (27) qui est destiné à détecter la présence des organes de commande (7, 9) et qui est relié au ou à chaque bras orientable (61) pour coopérer avec lui en vue d'ouvrir le vantail (43) lors de l'entrée dans une station (5) et à le fermer lors de la sortie de la station, caractérisée en ce que le vantail (43) est articulé sur le bras orientable (61) à l'aide d'un tourillon vertical (63), en ce que l'organe palpeur (27) est relié à une biellette (72) de façon à coopérer avec elle, en ce que le bras orientable (61) est relié, de façon à en être solidaire en rotation, à une denture s'étendant au moins sur un secteur de cercle, en ce qu'il est prévu une crémaillère (71) et un moyen de maintien (67), afin de maintenir la crémaillère (71) engrenée avec la denture (65) constituant au moins un secteur, avec possibilité de translation et de basculement par rapport à la caisse, et en ce que la crémaillère (71) est reliée à un bras pivotant (73), monté sur la biellette (72), par un organe intermédiaire (77, 81) à variation limitée de longueur.

7. Caisse selon la revendication 6, caractérisée en ce que les bras pivotants (73) montés sur la biellette (72) sont agencés de façon telle que, lors d'un basculement de la biellette en vue de l'ouverture du vantail (43), le point de liaison entre le bras pivotant (73) et la crémaillère (71) doit tout d'abord franchir le point mort, et en ce qu'il est prévu au moins un moyen élastique (81, 85) qui est agencé de façon telle que, pour assurer la fermeture du vantail (43) ouvert, la biellette (72) doit tout d'abord être basculée à l'encontre de l'effort de ce moyen élastique (81, 85), à la suite de quoi ce moyen élastique (81, 85) assiste l'opération de fermeture.

8. Caisse selon la revendication 7, caractérisée en ce que l'organe intermédiaire à variation de longueur (77, 81) comprend le ou un moyen élastique (81) conçu pour produire un effort de compression, cet organe intermédiaire à variation de longueur (77, 81) comprenant de préférence une barre (77) dont une extrémité est rigidement reliée à la susdite crémaillère (71) et dont l'autre extrémité est reliée à la biellette (72) de manière à pouvoir pivoter et à se déplacer en translation longitudinale, le moyen élastique (81) qui fait partie de l'organe intermédiaire à variation de longueur (77) étant de préférence disposé entre une butée (77a) de la barre (77) et le point de liaison où cette barre (77) est reliée à la biellette (72).

9. Caisse selon l'une des revendications 6 à 8, caractérisée en ce que la biellette comprend une partie munie d'une denture qui engrène avec une crémaillère reliée à l'organe palpeur (27).

10. Caisse selon l'une des revendications 1 à 9, comprenant un plancher (31), deux parois latérales opposées (33, 35) dont l'une au moins comporte une baie du type indiqué, deux parois frontales opposées (37) et un toit (39), caractérisée en ce qu'il est prévu une ossature qui relie le plancher (31) au toit (39), ainsi que des barres profilées s'étendant le long des bords de parois voisines et reliant également celles-ci l'une à l'autre, en ce que les parois frontales (37) ont une courbure convexe et en ce que les parois latérales (33, 35) ont aussi une courbure convexe, chaque barre profilée étant de préférence incurvée dans un plan qui, en projection horizontale, forme un angle de 45° avec les parois qui se raccordent à l'endroit de la barre profilée considérée.

0 140 930

Fig. 1

Fig. 2

Fig. 3

1

Fig.4

Fig 5

Fig.8

Fig. 6

0 140 930

Fig. 7

105

101

109

101

101

107

109

103

103

## Fig. 9

101

## Fig.10

105

105

111

111b

111b

111a

101

## Fig.11

5